(19) **Europäisches Patentamt**
**European Patent Office**
**Office européen des brevets**

(11) **EP 1 948 453 B1**

(12) **EUROPÄISCHE PATENTSCHRIFT**

(45) Veröffentlichungstag und Bekanntmachung des Hinweises auf die Patenterteilung:
**10.04.2013 Patentblatt 2013/15**

(21) Anmeldenummer: **06819459.6**

(22) Anmeldetag: **14.11.2006**

(51) Int Cl.:
***B60C 23/06*** (2006.01)

(86) Internationale Anmeldenummer:
**PCT/EP2006/068440**

(87) Internationale Veröffentlichungsnummer:
**WO 2007/054585 (18.05.2007 Gazette 2007/20)**

(54) **VERFAHREN ZUR INDIREKTEN REIFENDRUCKÜBERWACHUNG**

METHOD FOR INDIRECTLY MONITORING A TIRE PRESSURE

PROCEDE DE CONTROLE INDIRECT DE LA PRESSION DES PNEUS

(84) Benannte Vertragsstaaten:
**DE FR**

(30) Priorität: **14.11.2005 DE 102005054556**
**14.11.2006 DE 102006053826**

(43) Veröffentlichungstag der Anmeldung:
**30.07.2008 Patentblatt 2008/31**

(73) Patentinhaber:
• **Continental Teves AG & Co. oHG**
**60488 Frankfurt (DE)**
• **Continental Aktiengesellschaft**
**30165 Hannover (DE)**

(72) Erfinder:
• **KÖBE, Andreas**
**64625 Bensheim (DE)**

• **KOUKES, Vladimir**
**64297 Darmstadt (DE)**
• **IRTH, Markus**
**55252 Mainz-Kastel (DE)**
• **BLANK, Franko**
**29693 Hodenhang (DE)**
• **SUSSMANN, Christian**
**61250 Usingen (DE)**

(74) Vertreter: **Brand, Markus**
**c/o Continental Teves AG & Co. oHG,**
**Guerickestrasse 7**
**60488 Frankfurt am Main (DE)**

(56) Entgegenhaltungen:
**WO-A-2005/005173      WO-A-2005/072995**
**US-A- 5 982 279**

**EP 1 948 453 B1**

**Beschreibung**

Die Erfindung betrifft ein Verfahren gemäß Oberbegriff von Anspruch 1 sowie ein Computerprogrammprodukt.

In modernen Kraftfahrzeugen finden vermehrt Systeme Anwendung, welche zu einem aktiven oder passiven Schutz der Insassen beitragen. Systeme zur Reifendrucküberwachung schützen die Fahrzeuginsassen vor Fahrzeugschäden, welche beispielsweise auf einen nicht korrekten Reifenluftdruck zurückzuführen sind. Durch einen nicht angepassten Reifenluftdruck können sich beispielsweise der Reifenverschleiß und der Kraftstoffverbrauch erhöhen oder es kann zu einem Reifendefekt ("Reifenplatzer") kommen. Es sind bereits verschiedene Reifendrucküberwachungssysteme bekannt, welche entweder auf Basis direkt messender Sensoren arbeiten oder durch Auswertung von Drehzahl- oder Schwingungseigenschaften der Fahrzeugräder einen abnormalen Reifendruck erkennen.

Aus der DE 100 58 140 A1 ist ein so genanntes indirekt messendes Reifendrucküberwachungssystem (DDS: Deflation Detection System) bekannt, welches durch Auswertung der Raddrehbewegung einen Reifendruckverlust detektiert.

Aus der EP 0 578 826 B1 ist ein Reifendruckbestimmungsvorrichtung bekannt, welcher auf Basis von Reifenschwingungen einen Druckverlust in einem Reifen ermittelt.

In der WO 01/87647 A1 ist ein Verfahren und eine Vorrichtung zur Reifendrucküberwachung beschrieben, welche/s ein auf der Erfassung von Radradien basierendes Reifendrucküberwachungssystem und ein auf der Auswertung von Schwingungseigenschaften basierendes Reifendrucküberwachungssystem kombiniert.

Aus der WO 05/072995 A1 ist ein Verfahren , gemäß dem Oberbegriff des Anspruchs 1, zur Reifendrucküberwachung bekannt, welches ein indirekt messendes Reifendrucküberwachungssystem durch Berücksichtigung mindestens einer Torsionseigenfrequenz dahingehend verbessert, dass die sichere Erkennung eines abnormalen Reifenluftdrucks erhöht wird.

Weiterhin ist aus der WO2005/005173 A1 eine Warnstrategie bekannt, welche eine Abrollanalyse mit einer Eigenfrequenzanalyse der Reifen kombiniert. Die Abrollanalyse der Reifen kann hier durch das Ergebnis der Eigenfrequenzanalyse korrigiert werden.

Aufgabe der Erfindung ist es, ein Reifendrucküberwachungssystem für ein Kraftfahrzeug basierend auf der Auswertung der Raddrehbewegung und der Reifenschwingungen bereitzustellen, bei welchem die Zuverlässigkeit der Erkennung und Bewarnung von Reifenluftdruckverlusten erhöht ist.

Diese Aufgabe wird erfindungsgemäß durch das Verfahren nach Anspruch 1 gelöst.

Der Erfindung liegt der Gedanke zugrunde, die Warnstrategie sowohl auf der getrennten Auswertung einer Abrollumfangsanalyse der Reifen sowie einer Eigenfrequenzanalyse der Reifen als auch auf einer Kombination der beiden Analysen aufzubauen.

Bei der Kombination der Abrollumfangsanalyse und der Frequenzanalyse werden zur Bewarnung bevorzugt Warnschwellen jeder der beiden Analysemethoden in Abhängigkeit von den Ergebnissen, z.B. von Analysegrößen, der jeweils anderen Methode angepasst. So wird eine Verbesserung der Zuverlässigkeit der Bewarnung erreicht. Zur Anpassung der Warnschwelle(n) werden besonders bevorzugt die Druckverlustanalysegrößen der jeweils anderen Methode verwendet.

Ebenso ist es bevorzugt, dass bei der Kombination beider Analysemethoden Warnschwellen jeder der beiden Analysemethoden in Abhängigkeit von den Ergebnissen der jeweils anderen Methode und einem Korrelationsmaß zwischen den beiden Analysemethoden gewählt werden. Das Korrelationsmaß beschreibt, inwieweit Abrollumfangsanalyse und Frequenzanalyse das gleiche Bild eines oder mehrerer Druckverluste an den Rädern beschreiben. Auch hier werden zur Anpassung der Warnschwelle(n) besonders bevorzugt die Druckverlustanalysegrößen der jeweils anderen Methode verwendet.

Gemäß einer bevorzugten Ausführungsform werden bei der Kombination beider Analysemethoden jeweils für Abrollumfangsanalyse und Frequenzanalyse radindividuelle Druckverlustanalysegrößen bestimmt. Hierdurch wird eine radindividuelle Bewarnung und eine radindividuelle Kombination der beiden Analysemethoden möglich. Besonders bevorzugt werden Warnschwellen jeder der beiden Analysemethoden in Abhängigkeit von den radindividuellen Druckverlustanalysegrößen der jeweils anderen Methode gewählt.

Gemäß einer Weiterbildung der Erfindung werden die Warnschwellen auch in Abhängigkeit von der Verfügbarkeit der Analysegrößen verändert. Hierdurch wird die Fehlwarngefahr verringert, wenn eine Analysemethode zeitweise keine oder keine zuverlässigen Informationen liefert.

Bevorzugt wird für mindestens ein Rad, besonders bevorzugt für jedes Rad, eine kombinierte radindividuelle Druckverlustanalysegröße aus den Druckverlustanalysegrößen der Abrollumfangsanalyse und Frequenzanalyse desselben Rades bestimmt. Dabei gehen besonders bevorzugt auch die Warnschwellen oder die gemeinsame Warnschwelle beider Analysemethoden ein. Außerdem ist es besonders bevorzugt, die kombinierte radindividuelle Druckverlustanalysegröße anhand eines Warnfeldes zu bestimmen. Übersteigt die kombinierte radindividuelle Druckverlustanalysegröße einen Schwellenwert, so kann auf einen Druckverlust an dem entsprechenden Rad entschieden werden.

In einer Weiterbildung der Erfindung wird eine Warnung hinsichtlich eines Reifendruckverlustes in Abhängigkeit von mindestens zwei, besonders bevorzugt in Abhängigkeit von allen, der kombinierten radindividuellen Druckverlustanalysegrößen ausgegeben.

Bevorzugt erfolgt die Warnung anhand des Maximums der kombinierten radindividuellen Druckverlustanalysegrößen.

Gemäß einer weiteren bevorzugten Ausführungsform wird für mindestens eine der Analysegrößen der Abrollumfangsanalyse, der Eigenfrequenzanalyse oder der Kombination der beiden Analysen, eine Plausibilitätsprüfung des bestimmten Wertes durchgeführt. Hierzu wird der zeitliche Verlauf der Analysegröße betrachtet. Dabei kann eine Abrollumfangsanalysegröße, ein Frequenzanalysegröße, eine Druckverlustanalysegröße oder eine kombinierte Druckverlustanalysegröße überprüft werden.

Anhand des Ergebnisses der Plausibilitätsprüfung wird bevorzugt eine Entscheidung darüber getroffen, ob ein Druckverlust oder ein Störeinfluss vorliegt. Hierdurch werden Fehlwarnungen, welche durch Störeinflüsse hervorgerufen werden, vermieden.

Zusätzlich wird die Beladung und/oder eine Beladungsänderung des Fahrzeugs gemäß einer weiteren bevorzugten Ausführungsform ermittelt. Hierdurch sollen Änderungen der Beladung, welche Einfluss auf Analysegrößen der einzelnen Analysemethoden haben können, erkannt werden, um so Fehlwarnungen durch Änderung der Beladung zu vermeiden.

Bevorzugt wird die Beladungs- und/oder Beladungsänderungserkennung durch Verknüpfung mindestens einer Information einer Abrollumfangsanalyse der Räder mit mindestens einer Information einer Frequenzanalyse des Eigenschwingverhaltens mindestens eines Reifens erreicht. Diese Informationen liegen erfindungsgemäß bereits vor und somit sind für die Erkennung einer Beladungsänderung keine weiteren Sensoren oder ähnliches notwendig.

Vorteilhafterweise wird in der Frequenzanalyse für mindestens ein Rad eine Maßgröße, welche eine Maß für die Ausprägung der Eigenfrequenz darstellt, bestimmt. Besonders vorteilhaft ist es, wenn für jedes Rad eine solche Maßgröße bestimmt wird. Besonders bevorzugt wird als Maßgröße der Energiegehalt des Spektrums im Bereich der Eigenfrequenz verwendet. Die Maßgröße(n) oder ein Verhältnis von Maßgrößen wird/werden dann zur Erkennung der Beladung und/oder Beladungsänderung verwendet. Besonders bevorzugt wird das Verhältnis der Maßgrößen zwischen Vorder- und Hinterrädern verwendet.

In einer Weiterbildung der Erfindung führt die Feststellung einer Beladung und/oder Beladungsänderung zu einer Änderung der Warnschwelle(n) der Analysegrößen und/oder zu einer Kompensation der Analysegrößen. Vorteilhafterweise werden die beladungsabhängigen Druckverlustanalysegrößen kompensiert oder die Warnschwellen der beladungsabhängigen Druckverlustanalysegrößen angepasst.

Gemäß einer weiteren bevorzugten Ausführungsform wird, insbesondere in der Frequenzanalyse, eine Temperaturkompensation einer Analysegröße, insbesondere einer Frequenzanalysegröße, mindestens eines Reifens durchgeführt. Dies bietet den Vorteil, dass der Einfluss der Reifentemperatur auf den Reifen berücksichtigt werden kann. Hierdurch wird die Fehlwarngefahr bzw. Nichtwarngefahr bei Druckverlust bei Fahrten mit hohen Temperaturschwankungen vermindert. Besonders bevorzugt wird eine Temperaturkompensation einer durch die Frequenzanalyse bestimmten Eigenfrequenz des Reifens durchgeführt.

Zur Bestimmung einer Temperatur-Kompensationsgröße wird bevorzugt eine mittels eines Temperaturmodells berechnete Reifentemperatur verwendet. Die Temperatur-Kompensationsgröße für die Frequenzanalyse ist vorteilhafterweise ein Quotient aus Änderung der Frequenzanalysegröße zu Temperaturänderung.

Bevorzugt wird zum Einlernen der Kompensationsgröße die Analysegröße zusammen mit der berechneten Reifentemperatur über ein oder mehrere Fahrten betrachtet. Somit ist eine ausreichende statistische Relevanz sichergestellt.

Das Temperaturmodell berücksichtigt bevorzugt mindestens eine der folgenden Wärmeänderungen: Wärmefluss durch Walkarbeit des Reifens ($\dot{Q}_{Walk}$), Wärmefluss durch Konvektion ($\dot{Q}_{Convection}$), Wärmefluss durch Abstrahlung des Reifens ($\dot{Q}_{Radiation}$) oder Wärmefluss durch Wärmeeintrag des Fahrzeuges ($\dot{Q}_{VehicleCondition}$). Bevorzugt wird aus mindestens einer der Wärmeänderungen, ganz besonders bevorzugt aus der Summe aller Wärmeänderungen, durch zeitliche Integration die Reifentemperatur berechnet.

In dem Temperaturmodell werden vorteilhafterweise mindestens zwei der folgenden Größen berücksichtigt: Außentemperatur, Temperatur in einem Steuergerät, Motor-Ansauglufttemperatur, Kühlmitteltemperatur, Motortemperatur, Bremsentemperatur, Standzeit des Fahrzeugs, Fahrprofil seit Einschalten der Zündung, besonders bevorzugt Fahrzeuggeschwindigkeit, Gierrate, Querbeschleunigung, Antriebsmoment und/oder gefahrene Kilometer, Umgebungssensorinformationen, wie z.B. Regensensor- und/oder Taupunktsensorinformationen.

Ein Vorteil des erfindungsgemäßen Verfahrens liegt in der verbesserten Unterdrückung oder Vermeidung von Fehlwarnungen bzw. Nichtwarnungen bei Druckverlust.

Die Erfindung betrifft auch ein Computerprogrammprodukt, welches einen Algorithmus nach dem vorstehend beschriebenen Verfahren definiert.

Weitere bevorzugte Ausführungsformen ergeben sich aus den Unteransprüchen und der nachfolgenden Beschreibung an Hand von Figuren.

Es zeigen

Fig. 1    ein schematisches Blockschaltbild eines beispielsgemäßen Verfahrens,

Fig. 2    ein schematisches Blockschaltbild zu einem Ausführungsbeispiel zur Kombination der beiden Analysemethoden,

Fig. 3    ein Warnfeld zur Bewarnung eines radindividuellen Druckverlusts,

Fig. 4    einen Einfluss der Korrelation zwischen Abrollumfangsanalyse und Eigenfrequenzanalyse auf die Warnschwellen in einem Warnfeld,

Fig. 5    eine Warnstrategie zur Bewarnung eines Reifenluftdruckverlusts anhand von vier Warnfeldern,

Fig. 6    ein schematisches Blockschaltbild zu einer Temperaturkompensation in der Frequenzanalyse, und

Fig. 7    ein schematisches Blockschaltbild zu einer Reifentemperaturberechnung.

In der Schrift WO 2005/072995 A1 "Verfahren zur indirekten Reifendrucküberwachung" wird ein System beschrieben, welches aus der Änderung von Abrollumfangsanalysegrößen in Kombination mit Änderungen von Torsionseigenfrequenzen des Reifens auf einen Druckverlust schließt. Durch das erfindungsgemäße Verfahren sollen die folgenden Probleme des bekannten Verfahrens gelöst werden:

1. Verfügbarkeit des Systems:

Die beiden Analysemethoden (Abrollumfangsanalyse und Eigenfrequenzanalyse) haben unterschiedliche Anforderungen bzw. Bedingungen, um aktiv zu sein und zuverlässige Werte zu liefern. Bei Warnschwellen, die sich nicht auf diese verschiedenen Aktivitätsstati/Verfügbarkeitszustände einstellen, ergibt sich eine erhöhte Fehlwarn- bzw. Nichtwarngefahr bei Druckverlust.

2. Schwellenbeeinflussung:

Die Schrift WO 2005/072995 A1 behandelt den Fall, dass die Warnschwellen für die Abrollumfangsanalysegrößen in Abhängigkeit von der Korrelation der beiden Druckverlustanalysegrößen (z.B. Frequenzverschiebung und Abrollumfangsdifferenz bzw. Abrollumfangsänderung) und dem Absolutwert der Frequenzverschiebung angepasst werden. Eine Anpassung der Warnschwellen für die Frequenzverschiebung (Frequenzanalysegröße) wird nicht offenbart.

3. Signal-Plausibilität:

Die Analysegrößen, insbesondere aus der Eigenfrequenzanalyse, unterliegen statistischen Schwankungen und Straßeneinflüssen. Dies kann dazu führen, dass z.B. ein rapider Eigenfrequenzabfall vom Algorithmus detektiert wird, ohne dass ein Druckverlust stattgefunden hat. Dies kann zu Fehlwarnungen führen.

4. Beladung:

Die Abrollumfangsanalysegröße reagiert auf eine erhöhte Beladung in gleicher Weise wie auf einen Druckverlust. Demnach ist eine Unterscheidung zwischen einer erhöhten Beladung und einem Druckverlust allein mit Werten aus der Abrollumfangsanalyse nicht möglich. Dies führt insbesondere beim Einlernen mit entladenem Fahrzeug und späterer Fahrt mit beladenem Fahrzeug zu einer erhöhten Fehlwarngefahr.

5. Temperatureinfluss:

Die Reifentemperatur hat einen Einfluss auf den Druck im Reifen (erhöhte Temperatur => erhöhter Druck => erhöhte Steifigkeit => erhöhte Eigenfrequenz). Allerdings wird die Steifigkeit des Reifenmaterials (Gummi) ebenso durch die Temperatur beeinflusst (erhöhte Temperatur => weicheres Gummi => geringere Steifigkeit => geringere Eigenfrequenz). Es hat sich gezeigt, dass sich die beiden Effekte in ihrem Einfluss auf die Eigenfrequenz nicht kompensieren, sondern der Effekt abhängig von Material, Reifentemperatur und Innendruck ist. Dies führt bei Fahrten mit hohen Temperaturschwankungen zu Veränderungen der Eigenfrequenzen im Reifen, die im Größenbereich eines Druckverlustes liegen. Damit geht eine erhöhte Fehlwarngefahr bzw. Nichtwarngefahr bei Druckverlust einher.

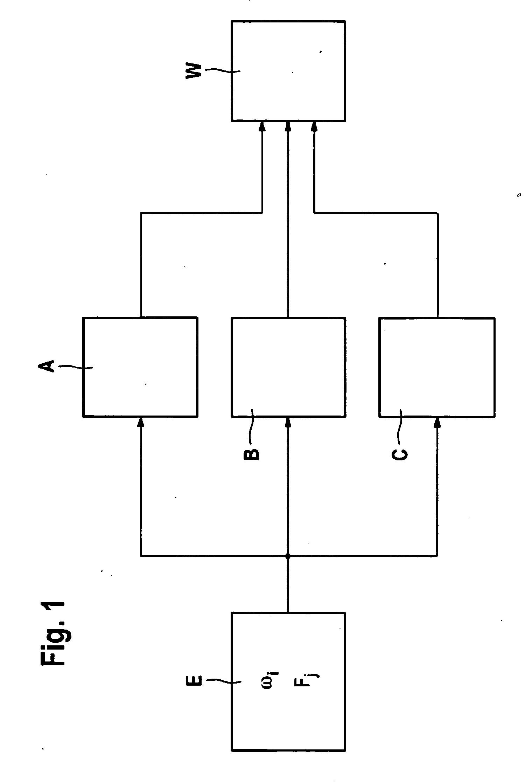

In Fig. 1 ist ein schematisches Blockschaltbild eines beispielsgemäßen Verfahrens dargestellt, welches die oben genannten Probleme löst. Als Eingangsgrößen (Block E) gehen die Raddrehzahlsensorsignale $\omega_i$ oder mit diesen zusammenhängende Größen und/oder Fahrzustands- und/oder Fahrzeuginformationen $F_j$ in das beispielsgemäße Verfahren ein. Das Gesamtsystem besteht aus drei Verfahrenszweigen A, B, C, die unabhängig voneinander eine Warnung (Block W) auslösen können: Block A: Abrollumfangsanalyse, Block B: Kombination von Abrollumfangsanalyse und Frequenzanalyse, und Block C: Frequenzanalyse.

Block A - Abrollumfangsanalyse:

Ein bereits bekanntes indirekt messendes Reifendrucküberwachungsystem wird verwendet. In diesem Zweig A sind Druckverluste an einem Reifen erkennbar. Insbesondere kann ein System basierend auf der Auswertung der Prüfgrößen DIAG, SIDE und AXLE verwendet werden. Hierzu werden drei Prüfgrößen (DIAG, SIDE, AXLE) gleichzeitig oder nacheinander bestimmt, wobei in jede Prüfgröße (DIAG, SIDE, AXLE) Größen eingehen, welche die Raddrehbewegungen der Räder beschreiben, wie beispielsweise die Umdrehungszeiten einer Radumdrehung, der Abrollumfang, etc.. Die Prüfgrößen bestehen im Wesentlichen aus einem Quotienten in dessen Zähler und Nenner jeweils die Summe zweier die Raddrehbewegungen beschreibender Größen steht. In dem Zähler der Prüfgröße DIAG steht beispielsweise die Summe der Größen der Raddrehbewegung der zwei sich diagonal gegenüberliegenden Räder (z.B. Rad vorne links und Rad hinten rechts), wohingegen im Nenner die Summe der übrigen Größen der Raddrehbewegungen steht (z.B. Rad vorne rechts und Rad hinten links). Bei der Prüfgröße SIDE stehen im Zähler beispielsweise die Größen der Raddrehbewegungen einer Fahrzeugseite (z.B. Rad vorne rechts und Rad hinten rechts), wohingegen bei der Prüfgröße AXLE im Zähler die Größen der Raddrehbewegungen der Räder einer Achse (z.B. Rad vorne rechts und Rad vorne links) stehen. Die Nenner werden jeweils aus den übrigen Größen der Raddrehbewegungen gebildet. Diese Prüfgrößen können in verschiedenen Geschwindigkeits-, Radmomenten- und Querbeschleunigungs- oder Gierratenintervallen ermittelt werden. Weiterhin werden Abrollumfangsanalysegrößen zur Druckverlustbewarnung ($\Delta$DIAG, $\Delta$SIDE, $\Delta$AXLE) zwischen aktuellen und gelernten Werten bestimmt. Diese Abrollumfangsanalysegrößen werden folglich auch in den Intervallen aus einem aktueller Wert und dem zum aktuellen Intervall gehörigen Lernwert bestimmt.

Block B - Abrollumfangsanalyse und Frequenzanalyse:

Durch die Kombination der Abrollumfangsanalyse und der Frequenzanalyse wird es möglich, Reifendruckverluste an ein bis drei Reifen robust zu erkennen.

Block C - Frequenzanalyse:

Bei einem Druckverlust an allen vier Reifen liefert die Abrollumfangsanalyse nur sehr begrenzt einen Beitrag zur Druckverlusterkennung. Für diesen Fall liefert die Frequenzanalyse allein zuverlässige Informationen und kann die Warnung auslösen.

Mit jedem neuen und gültigen Ergebnis aus der Abrollumfangsanalyse wird in die Wege A und B verzweigt. Mit jedem neuen und gültigen Ergebnis der Frequenzanalyse werden die Wege B und C durchlaufen. Auf Block B und Block C wird im Folgenden nochmals näher eingegangen.

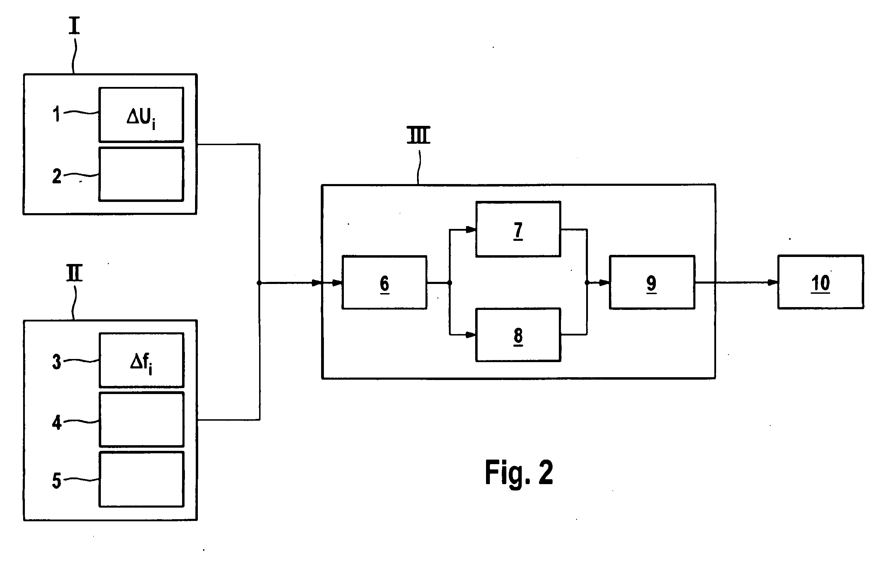

Fig. 2 zeigt ein schematisches Blockschaltbild zu einem Ausführungsbeispiel zur Kombination (Block B in Fig. 1) der beiden Analysemethoden Abrollumfangsanalyse I und Frequenzanalyse II. In Block 1 wird für die Abrollumfangsanalyse I eine Berechnung von Druckverlustanalysegrößen durchgeführt. Dazu werden radindividuelle Abrollumfangsanalysegrößen $\Delta U_i$ (z.B. i=1, 2, 3, 4, der Index i steht jeweils für ein Rad, z.B. i=1 bedeutet vorne links etc.) aus den Abrollumfangsanalysegrößen berechnet. Hierzu wird bevorzugt das in der Schrift WO 2005/072995 A1 offenbarte Verfahren verwendet. In Block 3 werden in der Eigenfrequenzanalyse II Druckverlustanalysegrößen berechnet. Hierzu wird mindestens eine radindividuelle Eigenfrequenzanalysegröße $\Delta f_i$ (auch hier steht der Index i jeweils für ein Rad, entsprechend der Abrollumfangsanalysegrößen $\Delta U_i$), z.B. eine Eigenfrequenz oder Eigenfrequenzverschiebung, bestimmt, z.B. gemäß eines Verfahrens aus der Schrift WO 2005/072995 A1 oder WO 2005/005174 A1. In den Blöcken 2 und 5 wird beispielsgemäß eine Signal-Plausibilitätsprüfung der entsprechenden Analysegrößen durchgeführt. Die Ausprägung der Eigenfrequenz und/oder der Energiegehalt des Spektrums wird beispielsgemäß in Block 4 untersucht und bestimmt. Hierzu wird z.B. eine Maßgröße bestimmt, die eine Aussage über die im relevanten Bereich des Spektrums enthaltene Energie macht. Möglich ist ebenso die Bestimmung einer Maßzahl für die Ausprägung der Eigenfrequenz. Diese Maßgröße ist insbesondere für die Beladungserkennung von entscheidender Bedeutung. Die Informationen aus Abrollumfangsanalyse I und Frequenzanalyse II werden zur Durchführung einer Warnstrategie III verwendet, welche zu einer Warnung 10, z.B. in Form der Ansteuerung einer Warnlampe, führen kann.

Bei einem schnellen Ausschlag in einer oder mehreren der Druckverlustanalysegrößen $\Delta U_i$, $\Delta f_i$ kann es sich,

5

wie oben bereits beschrieben, entweder um einen Störeinfluss oder aber um einen tatsächlichen schnellen Druckverlust handeln. Zur Unterscheidung, ob es sich um einen Störeinfluss oder einen tatsächlichen Druckverlust handelt, wird in der Signal-Plausibilitätsprüfung (Block 2 oder 5) die zeitliche Historie bewertet. Die Bewertung stützt sich auf die Grundidee, dass bei einem Störeinfluss die Druckverlustanalysegröße $\Delta U_i$, $\Delta f_i$ in der Regel nach dem schnellen Absinken auf einem festen Niveau verharrt, während ein plötzlicher Druckverlust, verursacht z.B. durch einen während der Fahrt aufgetretenen Reifenschaden, die Druckverlustanalysegröße $\Delta U_i$, $\Delta f_i$ immer weiter absinken lässt.

In einem Ausführungsbeispiel wird die Änderung jeder Druckverlustanalysegröße $\Delta U_i$, $\Delta f_i$ über der Zeit bewertet. Liegt diese oberhalb einer bestimmten Schwelle, so vermutet man einen schnellen Druckverlust bzw. einen Störeinfluss. Eine evtl. Warnung wird zunächst verhindert und das Signal wird für eine weitere Zeit beobachtet. Steigt die Druckverlustanalysegröße $\Delta U_i$, $\Delta f_i$ in dem folgenden Beobachtungsintervall weiter, so kann auf einen plötzlichen Druckverlust geschlossen werden und die Warnung wird zugelassen. Verharrt die Druckverlustanalysegröße $\Delta U_i$, $\Delta f_i$ jedoch auf dem erhöhten Niveau, so schließt man auf einen Störeinfluss und die Warnung wird weiterhin verhindert. Erst ein weiteres Steigen kann zu einem Freischalten der Warnung führen, bzw. ein Absinken unter den kritischen Bereich führt das System wieder in seinen Normalzustand (keine Verhinderung einer Warnung) zurück.

Da bei einem Stillstand des Fahrzeugs die Luft abgelassen werden kann und dann ein plötzlicher Abfall der Druckverlustanalysegröße $\Delta U_i$, $\Delta f_i$ zu verzeichnen wäre, die aber plausibel ist, wird eine solche Plausibilitätsprüfung erst aktiv, wenn das Fahrzeug schon eine bestimmte Zeit ohne Stillstand gefahren ist.

Die Warnstrategie III beruht u.a. auf der Verfügbarkeit des Systems bzw. der Teilsysteme. Es können während des Betriebs folgende Zustände bezüglich der Aktivität der beiden Systeme Abrollumfangsanalyse I und Eigenfrequenzanalyse II auftreten:

- Beide Systeme I, II sind verfügbar und liefern in kurzen Abständen Werte (Block 7)
- Nur ein System ist aktiv (Block 8):

  ○ Abrollumfangsanalyse I liefert aktuelle Werte, Eigenfrequenzanalyse II hat schon einige Zeit keine Werte (Einschränkung aufgrund von Fahrbedingungen) oder noch nie Werte geliefert (nicht eingelernt oder nach Beginn einer Fahrt noch nicht initialisiert).
  ○ Eigenfrequenzanalyse II liefert aktuelle Werte, Abrollumfangsanalyse I hat schon einige Zeit keine Werte (Einschränkung aufgrund von Fahrbedingungen) oder noch nie Werte geliefert (nicht eingelernt oder nach Beginn einer Fahrt noch nicht initialisiert).

Die Behandlung jedes einzelnen Zustandes und der Übergänge zwischen den Zuständen stützt sich auf die folgenden Grundideen:

- Beide Systeme I, II sind nur dann verfügbar, wenn der Abstand zweier hereingekommener Werte von unterschiedlichen Systemen nicht größer als eine bestimmte Zeit t ist (z.B. 1 Minute). In diesem Status können eine Korrelationsbetrachtung und eine gegenseitige Beeinflussung der Warnschwellen (Block 9) erfolgen.
- Der Übergang zwischen dem Status "Beide Systeme verfügbar" (Block 7) und "Nur ein System aktiv" (Block 8) erfolgt zeit- oder samplegesteuert. Dabei werden fließend die Warnschwellen angepasst (Block 9). Ein einzelnes System erhält aufgrund seiner erhöhten Unsicherheit bzgl. des Signals eine höhere Warnschwelle, als die Kombination aus beiden Systemen.

Ein weiterer Aspekt des in Fig. 2 schematisch dargestellten Ausführungsbeispiels ist die Beladungserkennung (Block 6). Allgemein ist jedes Verfahren, welches Aufschluss über eine Beladungsänderung gibt, oder eine Kombination verschiedener Verfahren zur Beladungserkennung zur Verwendung in einem erfindungsgemäßen Verfahren geeignet.

Eine Beladung führt zu einem Anstieg der Radlasten. Dies führt in den Eingangswerten der Warnstrategie zu einer Erhöhung der Druckverlustanalysegrößen $\Delta U_i$ für die belasteten Räder in der Abrollumfangsanalyse I und kann somit zu einer Fehlwarnung des Systems führen. In dem Ausführungsbeispiel blockiert daher Ladungserkennungsmodul 6 bei Detektion einer Beladungsänderung zunächst eine Warnung und veranlasst das System, insbesondere für die Werte aus der Abrollumfangsanalyse $\Delta U_i$, Kompensationswerte einzulernen. Nach erfolgter Kompensation wird die Warnung wieder frei geschaltet.

In einem anderen Ausführungsbeispiel wird die Beladungserkennung 6 nur aus den Raddrehzahlsignalen $\omega_i$ realisiert. Hierzu werden die Informationen aus Abrollumfangsanalyse I und Frequenzanalyse II kombiniert. Wie bereits oben erläutert, führt eine zusätzliche Beladung zu einem Anstieg der Radlasten, was zu einer Erhöhung der Druckverlustanalysegrößen $\Delta U_i$ für die belasteten Räder in der Abrollumfangsanalyse I führt. In der Frequenzanalyse II führt eine erhöhte Beladung nicht zu einer Beeinflussung der Eigenfrequenz, allerdings zu einer erhöhten Energie im Spektrum und zu einer ausgeprägteren Herausbildung der Eigenfrequenz. Da eine erhöhte Anregung des Reifens durch eine rauere Straße den gleichen Effekt wie eine zusätzliche Beladung hat, reicht es nicht aus, eine Betrachtung der absoluten Energie/Ausgeprägtheit durchzuführen. Vielmehr ist das Verhältnis der Energien/Ausgeprägtheit der Eigenfrequenz zwischen Vorder- und Hinterachse zu bilden.

Die Grundidee dieses Ausführungsbeispiels eines Beladungserkennungsmoduls 6 wird im Folgenden am Beispiel einer Hinterachsbeladung erläutert:

- Wenn:

  nach einem Stillstand und erfolgter Beladung auf der Hinterachse durch die Abrollumfangsanalyse I ein Druckverlust auf der Hinterachse angezeigt wird,

- und:

  die Eigenfrequenzanalyse II keine signifikante Verschiebung der Eigenfrequenz auf der Hinterachse zeigt,

- und zusätzlich:

  entweder der Absolutwert der Energie / die Ausgeprägtheit des Spektrums an den Hinterrädern im Vergleich zu einem vorher eingelernten Zustand gestiegen ist oder aber das Verhältnis dieser Größen von vorne zu hinten sich verändert hat,

- dann:

  wird auf eine mögliche Beladungsänderung erkannt und entweder die Warnschwellen im Warnfeld angepasst (Block 9) oder aber eine Kompensationsgröße für die Hinterachswerte aus der Abrollumfangsanalyse I ermittelt.

Ein weiterer Aspekt des in Fig. 2 schematisch dargestellten Ausführungsbeispiels ist die Warnungsentscheidung (Block 9), in welcher entschieden wird, ob eine Druckverlustwarnung 10 ausgegeben wird oder nicht. Ein wichtiger Punkt ist dabei die Beeinflussung der Schwellen der einzelnen Druckverlustanalysegrößen $\Delta U_i$, $\Delta f_i$ oder kombinierter Druckverlustanalysegrößen zur Druckverlusterkennung.

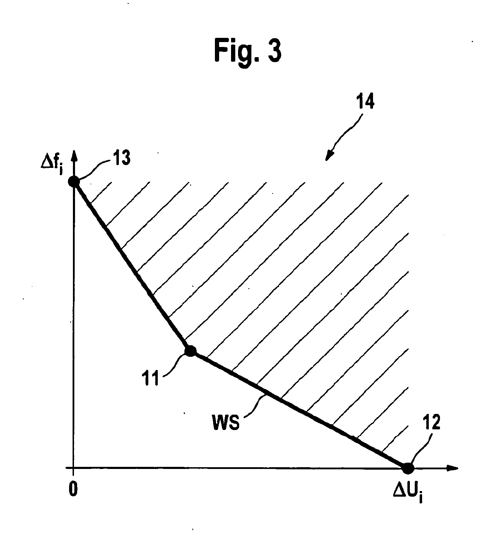

Wenn beide Systeme aktiv sind (Block 7), werden durch das folgende beispielsgemäße Verfahren sowohl die Informationen (Absolutwerte) der Einzelsysteme als auch die Korrelation der beiden Systeme miteinander verknüpft. Die beiden radindividuellen Druckverlustanalysegrößen $\Delta U_i$, $\Delta f_i$ aus Abrollumfangsanalyse I und Eigenfrequenzanalyse II eines Reifens (i ist fest) werden in einem Warnfeld 14 zu einer einzelnen Druckverlustanalysegröße miteinander verknüpft. Dies ist in Fig. 3 schematisch dargestellt. Auf der x-Achse ist die Druckverlustanalysegröße $\Delta U_i$ eines Reifens aus der Abrollumfangsanalyse I und auf der y-Achse die Druckverlustanalysegröße $\Delta f_i$ eines Reifens aus der Eigenfrequenzanalyse II aufgetragen. Unterhalb der Verbindungslinie der Punkte 13, 11, 12 (Warnschwelle WS) wird keine Druckverlustwarnung 10 ausgegeben, oberhalb der Verbindungslinie beträgt die kombinierte Druckverlustanalysegröße mehr als 100% und eine Warnung 10 wird ausgegeben.

Die Grundidee des Warnfelds 14 besteht darin, dass sich nur dann, wenn beide Druckverlustanalysegröße $\Delta U_i$, $\Delta f_i$ auf einen Druckverlust hindeuten, eine hohe kombinierte Druckverlustanalysegröße ergibt. Deutet nur ein System I oder II auf einen Druckverlust hin, so muss es einen sehr hohen Wert haben, um eine Warnung 10 auslösen zu können. Charakteristisch für das beispielsgemäße Warnfeld sind die drei Punkte 11, 12 und 13:

- Punkt 11 - Schnittpunkt:

  Liegen beide Werte oberhalb dieses Punkts, so ist die kombinierte Druckverlustanalysegröße größer als 100%.

- 12 - Durchstoßpunkt Abrollumfangsanalyse-Achse:

  Zeigt die Eigenfrequenzanalyse II keinen Druckverlust an, so muss die Abrollumfangsanalysegröße $\Delta U_i$ einen Wert oberhalb dieses Punktes anzeigen, damit die kombinierte Druckverlustanalysegröße größer als 100% wird.

- 13 - Durchstoßpunkt Eigenfrequenzanalyse-Achse:

  Zeigt die Abrollumfangsanalysegröße I keinen Druckverlust an, so muss die Eigenfrequenzanalyse einen Wert $\Delta f_i$ oberhalb dieses Punktes anzeigen, damit die kombinierte Druckverlustanalysegröße größer als 100% wird.

Damit ist zunächst eine radindividuelle Korrelation zwischen den beiden Systemen I und II hergestellt.

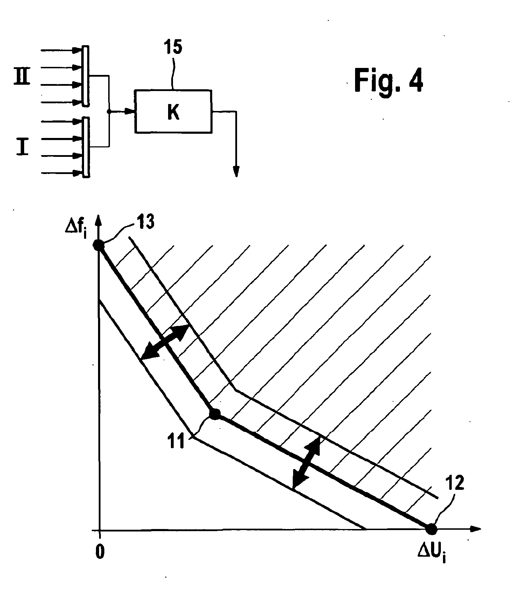

Darüber hinaus wird in einem anderen Ausführungsbeispiel, welches schematisch in Fig. 4 dargestellt ist, eine Bewertung vorgenommen, inwieweit Abrollumfangsanalyse I und Eigenfrequenzanalyse II das gleiche Druckverlustszenario anzeigen. Hierzu wird z.B. in Block 15 eine Korrelationsgröße K berechnet. Die Lage der Warnschwelle WS kann dann in Abhängigkeit von der Korrelationsgröße K verändert werden, wie dies in Fig. 4 schematisch angedeutet ist. Ergibt sich eine sehr gute Korrelation, so hat man ein hohes Vertrauen in die ermittelten Werte und die Schwelle WS wird abgesenkt (Richtung Ursprung in Fig. 4). Ist die Korrelation schlecht, so wird die Warnschwelle WS nach oben verschoben (Richtung rechts oben in Fig. 4).

Bei einem Übergang vom Zustand "beide Systeme aktiv" (Block 7) zu "Nur ein System aktiv" (Block 8) wird sukzessive der Druckverlustwert (die Druckverlustanalysegröße) des inaktiven Systems auf 0 heruntergeführt. Ebenso wird der Durchstoßpunkt des Warnfeldes an der Achse des aktiven Systems um einen Faktor angehoben. Dadurch erhält man die Warnfähigkeit auch dann, wenn nur ein System verfügbar ist, und verringert gleichzeitig die Fehlwarngefahr.

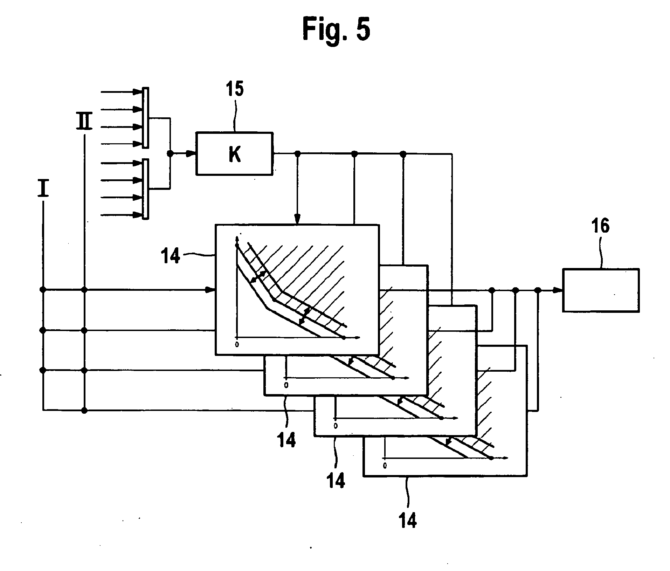

In einem weiteren Ausführungsbeispiel, welches in Fig. 5 schematisch dargestellt ist, wird das Maximum 16 der kombinierten Druckverlustanalysegrößen aus vier Warnfeldern 14 (je eines pro Rad) zur Herbeiführung einer Warnung 10 herangezogen. Befindet sich dieses Maximum 16 mit einer ausreichenden statistischen Signifikanz oberhalb von 100%, so wird die Warnung 10 ausgegeben, z.B. in Form einer Warnlampe.

Da in einer Abrollumfangsanalyse die Differenzen, Quotienten oder ähnliches der Drehzahlen (oder damit direkt zusammenhängender Größen, wie z.B. Umlaufzeiten oder Umfänge) untereinander ausgewertet werden, ist die Abrollumfangsanalyse bei einem vierrädrigen Druckverlust nahezu "blind". Für die Bewarnung eines gleichzeitigen vierrädrigen Druckverlusts werden, wie oben bereits erwähnt, deshalb nur die Informationen, z.B. die Druckverlustanalysegröße(n), aus der Frequenzanalyse ausgewertet (Block C in Fig. 1). Als Beispiel für eine Druckverlustanalysegröße aus der Frequenzanalyse wird in der folgenden Beschreibung die Eigenfrequenzverschiebung verwendet. Ebenso ist dies jedoch mit einer Druckverlustanalysegröße, welche sich aus Frequenzverschiebung und weiteren spektrenbeschreibenden Größen ergibt, wie es z.B. in der Schrift WO 2005/005174 A1 näher beschrieben wird, möglich. Beispielsgemäß liegt für jedes Rad eine Frequenzverschiebung vor.

Folgende Bedingungen für eine Warnung 10 müssen in diesem Zweig C erfüllt sein:

1. Alle vier Druckverlustanalysegrößen aus der Frequenzanalyse (Frequenzverschiebungen) müssen einen Druckverlust oberhalb einer definierten Schwelle (z.B. 80 % einer Warnschwelle) anzeigen.

2. Mindestens ein Reifen muss einen Wert oberhalb der 100% Schwelle anzeigen.

Weiterhin kann eine Plausibilisierung des Ergebnisses mit den Abrollumfangsanalysegroßen stattfinden. Diese dürfen keinen signifikanten Druckverlust an einzelnen Positionen zeigen.

Ein weiterer Aspekt bei der Frequenzanalyse ist eine Kompensation des Temperatureinflusses. Beispielsgemäß wird die Eigenfrequenz $f_k$ (dabei kann der Index k stehen für VL: vorne links, VR: vorne rechts, HL: hinten links, oder HR: hinten rechts) des Reifens zusammen mit einer berechneten Reifentemperatur eingelernt. Aus diesem Ensemble wird eine Kompensationsgröße für den Temperatureinfluss ermittelt, der auf die ermittelten Eigenfrequenzen angewendet wird.

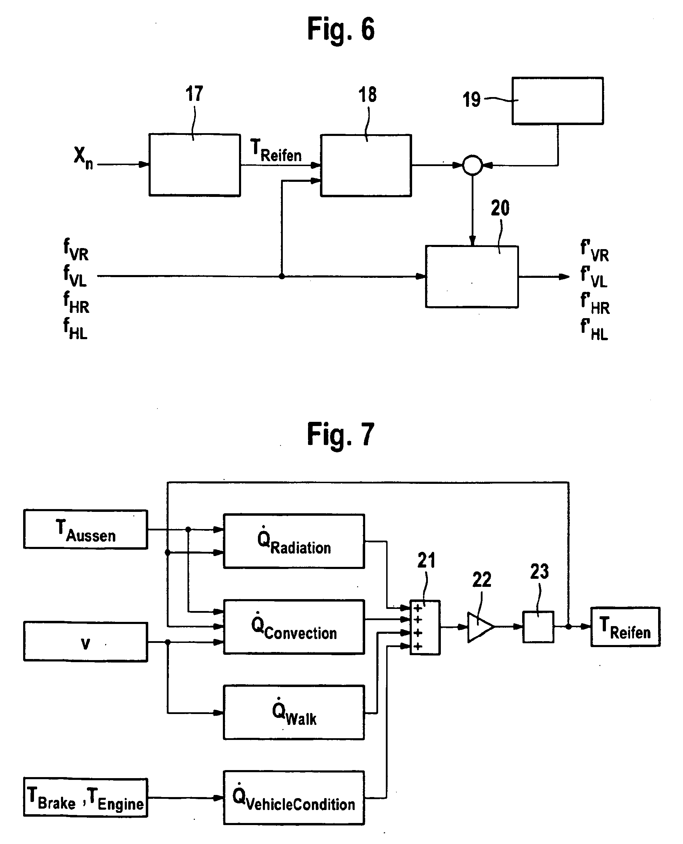

In Fig. 6 ist ein schematisches Blockschaltbild zur Temperaturkompensation in einer Frequenzanalyse dargestellt. Zu Beginn, bevor ein Kompensationswert vorliegt, wird zunächst ein empirischer Mittelwert (z.B. -0.5 Hz/10°C) als Grundkompensation 19 angenommen. Während des Einlernens wird dann aus verschiedenen Fahr-, Fahrzustands-, Fahrzeug- und Umweltinformationen $X_n$, wie z.B. Außentemperatur, Standzeit, Kühlmitteltemperatur, Fahrgeschwindigkeit, Fahrprofil etc., mit Hilfe eines Temperaturmodells 17 eine Reifentemperatur $T_{Reifen}$ berechnet. Außerdem werden entsprechend die Eigenfrequenzen der Räder $f_{VL}$, $f_{VR}$, $f_{HL}$, $f_{HR}$ bestimmt. Bei Vorliegen von Temperatur/Frequenz-Werte wird ein Korrekturfaktor 18 eingelernt. Dieser wird verwendet, um aus der Grundkompensation 19 einen aktuellen Temperaturkompensationswert 20 zu bestimmen, mit welchem die temperaturkompensierten Eigenfrequenzen $f'_{VL}$, $f'_{VR}$, $f'_{HL}$, $f'_{HR}$ bestimmt werden.

Beim Einlernen des Korrekturfaktors 18 wird eine Bewertung der Streubreite der Temperatur $T_{Reifen}$ durchgeführt. Der Korrekturfaktor 18 wird erst dann akzeptiert, wenn die Streubreite des gelernten Temperatur/Frequenz-Ensembles in Bezug auf die Temperatur $T_{Reifen}$ (z.B. niedrigste Temperatur zur höchsten Temperatur und ausreichende Anzahl von Wertepaaren über diesem Bereich) groß genug ist.

Das Temperaturmodell 17 verwendet zur Berechnung der Reifentemperatur $T_{Reifen}$ beispielsgemäß die folgenden Informationen:

- Außentemperatur $T_{Aussen}$, erhältlich entweder über einen Temperatursensor im Steuergerät oder aber über CAN Botschaften, wie z.B. Kombiaußentemperatur und Ansauglufttemperatur,
- Standzeit des Fahrzeugs: Abschätzung mitunter über die Kühlmitteltemperatur oder Motortemperatur $T_{Engine}$ in Kombination mit der Außentemperatur $T_{Aussen}$, falls keine Standzeit zur Verfügung steht,

- Fahrprofil, erhältlich aus dem Geschwindigkeitssignal v, Gierrate bzw. Querbeschleunigung sowie Antriebsmoment. Darüber hinaus berechnete Größen wie z.B. gefahrene Kilometer seit "Zündung-An", und
- Regensensor- bzw. Taupunktsensorinformationen, um auf die Nässe der Straße rückschließen zu können.

Diese Informationen werden mit Hilfe eines Temperaturmodells 17 verknüpft, welches in einem ersten Ausführungsbeispiel den Wärmefluss $\dot{Q}$ durch Walkarbeit $\dot{Q}_{Walk}$, Konvektion $\dot{Q}_{Convection}$ und Strahlungswärme $\dot{Q}_{Radiation}$ bilanziert, und daraus eine Reifentemperatur berechnet. In einem weiteren Term $\dot{Q}_{VehicleCondition}$ für Umweltbedingungen werden Einflüsse des Fahrzeugs, wie z.B. Bremsentemperatur und Motortemperatur, berücksichtigt.

Mögliche Berechnungsgleichungen sind:

Strahlung/Strahlungswärme:

$$\dot{Q}_{Radiation} = \varepsilon \cdot \sigma \cdot A \cdot \left( T_{Aussen}^4 - T_{Reifen}^4 \right) = \alpha_s \cdot \left( T_{Aussen}^4 - T_{Reifen}^4 \right)$$

Konvektion:

$$\dot{Q}_{Convection} = \alpha_k \cdot \sqrt{v} \cdot \left( T_{Aussen} - T_{Reifen} \right)$$

Walkarbeit:

$$\dot{Q}_{Walk} = f \cdot m \cdot g \cdot v = f \cdot F_z \cdot v$$

Fahrzeugbedingungen/Fahrzeugwärmeeintrag:

$$\dot{Q}_{VehicleCondition} = f \left( T_{Brake}, T_{Engine}, \ldots \right)$$

Mit

$\varepsilon$: Emissionsgrad,
$\sigma$: Stefan-Boltzmann-Konstante,
A: strahlende Oberfläche des Reifens,
$\alpha_s$: Proportionalitätskonstante der Strahlungswärme,
($\alpha_k$: Proportionalitätskonstante der Konvektion,
f: Proportionalitätskonstante des Rollwiderstandes,
$F_z$: Radlast,
v: Geschwindigkeit,
$T_{Aussen}$: Außentemperatur,
$T_{Reifen}$: Reifentemperatur, und
$f(T_{Brake}, T_{Engine}, \ldots)$: Funktion der Bremsentemperatur $T_{Brake}$, der Motortemperatur $T_{Engine}$ und weiterer Größen.

Die Reifentemperatur $T_{Reifen}$ kann dann berechnet werden aus:

$$T_{Reifen} = 1/C_{Reifen} \cdot \int \left( \dot{Q}_{Convection} + \dot{Q}_{Radiation} + \dot{Q}_{Walk} + \dot{Q}_{VehicleCondition} \right) dt + T_{Start}$$

Mit $C_{Reifen}$: Wärmekapazität des Reifen.

In Fig. 7 ist ein beispielsgemäßes Verfahren zur Berechnung der Reifentemperatur $T_{Reifen}$ nach obiger Gleichung schematisch dargestellt. Aus Außentemperatur $T_{Aussen}$, Fahrgeschwindigkeit v, Bremsentemperatur $T_{Brake}$, Motortemperatur $T_{Engine}$ und einem Startwert $T_{Start}$ für die Reifentemperatur werden die vier Wärmeflussbeiträge $\dot{Q}_{Walk}$, $\dot{Q}_{Convection}$, $\dot{Q}_{Radiation}$ und $\dot{Q}_{VehicleCondition}$ berechnet, in Block 21 aufaddiert, in Block 22 durch die Wärmekapazität $C_{Reifen}$ geteilt und in Block 23 über die Zeit t integriert. Die resultierende Reifentemperatur $T_{Reifen}$ wird zur Berechnung neuer Wärmeflussbeiträge $\dot{Q}_{Convection}$, $\dot{Q}_{Radiation}$ verwendet.

In einem besonders einfachen Ausführungsbeispiel wird der Strahlungsanteil $\dot{Q}_{Radiation}$ vernachlässigt. Als Ausgleich für die damit fehlende Temperaturabnahme wird eine minimale Geschwindigkeit v als Eingang für die Konvektionsgleichung angenommen.

Zur Bestimmung eines Startwertes $T_{Start}$ müssen die Plausibilisierungswerte aus der Standzeit herangezogen werden.

Gemäß einem weiteren Ausführungsbeispiel wird eine Berücksichtigung des Temperatureinflusses auch für die Analysegrößen ΔDIAG, ΔSIDE, ΔAXLE der Abrollumfangsanalyse durchgeführt. Hierzu werden die Prüfgröße DIAG, SIDE, AXLE zusammen mit einer berechneten Reifentemperatur eingelernt.

In einem weiteren Ausführungsbeispiel wird die oben beschriebene Temperaturkompensation auch bei der Frequenzanalyse II des kombinierten Verfahrens B durchgeführt.

## Patentansprüche

1. Verfahren zur indirekten Reifendrucküberwachung, in welchem eine Abrollumfangsanalyse der Reifen, in welcher aus aktuell ermittelten und eingelernten Prüfgrößen, welche die Raddrehbewegung der Räder beschreiben, Abrollumfangsanalysegrößen (ΔDIAG, ΔSIDE, ΔAXLE) bestimmt werden, und eine Frequenzanalyse des Eigenschwingverhaltens mindestens eines Reifens durchgeführt werden, in welcher mindestens eine Frequenzanalysegröße ($f_k$) bestimmt wird, wobei zur Bewarnung eines Reifendruckverlustes eine Auswertung der Abrollumfangsanalyse (A) und der Eigenfrequenzanalyse (C) und eine kombinierte Auswertung (B) beider Analysemethoden vorgenommen wird, **dadurch gekennzeichnet, dass** bei der Kombination beider Analysemethoden (B) Warnschwellen (WS) jeder der beiden Analysemethoden in Abhängigkeit von den Analysegrößen ($\Delta U_i$, $\Delta f_i$), insbesondere den radindividuellen Druckverlustanalysegrößen, der jeweils anderen Methode gewählt werden.

2. Verfahren nach Anspruch 1, **dadurch gekennzeichnet, dass** eine Eigenfrequenzanalyse für jeden Reifen durchgeführt wird.

3. Verfahren nach Anspruch 1 oder 2, **dadurch gekennzeichnet, dass** bei der Kombination beider Analysemethoden (B) jeweils für Abrollumfangsanalyse (I) und Frequenzanalyse (II) radindividuelle Druckverlustanalysegrößen ($\Delta U_i$, $\Delta f_i$) bestimmt werden.

4. Verfahren nach mindestens einem der Ansprüche 1 bis 3, **dadurch gekennzeichnet, dass** bei der Kombination beider Analysemethoden (B) Warnschwellen (WS) jeder der beiden Analysemethoden in Abhängigkeit von den Analysegrößen ($\Delta U_i$, $\Delta f_i$), insbesondere den radindividuellen Druckverlustanalysegrößen, der jeweils anderen Methode und einem Korrelationsmaß (K) zwischen den beiden Analysemethoden gewählt werden.

5. Verfahren nach Anspruch 1 oder 4, **dadurch gekennzeichnet, dass** die Warnschwellen (WS) in Abhängigkeit von der Verfügbarkeit (7, 8) der Analysegrößen ($\Delta U_i$, $\Delta f_i$), insbesondere der Druckverlustanalysegrößen, verändert werden.

6. Verfahren nach mindestens einem der Ansprüche 1 und 3 bis 5, **dadurch gekennzeichnet, dass** für mindestens ein Rad, insbesondere für jedes Rad, eine kombinierte radindividuelle Druckverlustanalysegröße, insbesondere anhand eines Warnfeldes (14), bestimmt wird, in welche die Druckverlustanalysegrößen ($\Delta U_i$, $\Delta f_i$), und insbesondere die Warnschwellen (WS), beider Analysemethoden eingehen.

7. Verfahren nach Anspruch 6, **dadurch gekennzeichnet, dass** eine Warnung (10) hinsichtlich eines Reifendruckverlustes in Abhängigkeit von mindestens zwei, insbesondere von allen, der kombinierten radindividuellen Druckverlustanalysegrößen ausgegeben wird.

8. Verfahren nach Anspruch 7, **dadurch gekennzeichnet, dass** die Warnung (10) anhand des Maximums (16) der kombinierten radindividuellen Druckverlustanalysegrößen erfolgt.

9. Verfahren nach mindestens einem der vorhergehenden Ansprüche, **dadurch gekennzeichnet, dass** für mindestens eine der bestimmten Analysegrößen ($\Delta U_i$, $\Delta f_i$), insbesondere Abrollumfangsanalysegröße, Frequenzanalysegröße, Druckverlustanalysegröße oder kombinierte Druckverlustanalysegröße, eine Plausibilitätsprüfung (2, 5) des bestimmten Wertes anhand des zeitlichen Verlaufs der Analysegröße durchgeführt wird.

10. Verfahren nach Anspruch 9, **dadurch gekennzeichnet, dass** anhand des Ergebnisses der Plausibilitätsprüfung (2, 5) eine Entscheidung getroffen wird, ob ein Druckverlust oder ein Störeinfluss vorliegt.

11. Verfahren nach mindestens einem der vorhergehenden Ansprüche, **dadurch gekennzeichnet, dass** die Beladung und/oder eine Beladungsänderung des Fahrzeugs ermittelt wird (6).

12. Verfahren nach Anspruch 11, **dadurch ekennzeichnet, dass** die Erkennung der Beladung und/oder Beladungsänderung (6) aus einer Verknüpfung mindestens einer Information einer Abrollumfangsanalyse (I) der Räder mit mindestens einer Information einer Frequenzanalyse (II) des Eigenschwingverhaltens mindestens eines Reifens ermittelt wird.

13. Verfahren nach Anspruch 12, **dadurch gekennzeichnet, dass** in der Frequenzanalyse (II) für mindestens ein Rad, insbesondere für jedes Rad, eine Maßgröße, welche eine Maß für die Ausprägung der Eigenfrequenz darstellt, insbesondere der Energiegehalt des Spektrums im Bereich der Eigenfrequenz, bestimmt wird, und dass die Maßgröße(n), insbesondere Verhältnisse von Maßgrößen, zur Erkennung der Beladung und/oder Beladungsänderung (6) verwendet wird/werden.

14. Verfahren nach Anspruch 13, **dadurch gekennzeichnet, dass** das Verhältnis der Maßgrößen zwischen Vorder- und Hinterrädern verwendet wird.

15. Verfahren nach mindestens einem der Ansprüche 11 bis 14, **dadurch ekennzeichnet, dass** die Feststellung einer Beladung und/oder Beladungsänderung (6) zu einer Änderung der Warnschwellen (WS) der Analysegrößen ($\Delta U_i$, $\Delta f_i$), insbesondere der beladungsabhängigen Druckverlustanalysegrößen, und/oder zu einer Kompensation der Analysegrößen, insbesondere der beladungsabhängigen Druckverlustanalysegrößen, führt.

16. Verfahren nach mindestens einem der vorhergehenden Ansprüche, **dadurch gekennzeichnet, dass**, insbesondere in einer Frequenzanalyse (C, II), eine Temperaturkompensation (20) einer Analysegröße ($f_k$, $\Delta$DIAG, $\Delta$SIDE, $\Delta$AXLE), insbesondere der Eigenfrequenz, mindestens eines Reifens durchgeführt wird.

17. Verfahren nach Anspruch 16, **dadurch gekennzeichnet, dass** zur Bestimmung einer Kompensationsgröße, insbesondere des Quotienten Änderung der Frequenzanalysegröße durch Temperaturänderung, eine mittels eines Temperaturmodells (17) berechnete Reifentemperatur ($T_{Reifen}$) verwendet wird.

18. Verfahren nach Anspruch 17, **dadurch gekennzeichnet, dass** das Temperaturmodell (17) mindestens eine der folgenden Wärmeänderungen berücksichtigt: Wärmefluss durch Walkarbeit des Reifens ($\dot{Q}_{walk}$), Wärmefluss durch Konvektion ($\dot{Q}_{Convection}$), Wärmefluss durch Abstrahlung des Reifens ($\dot{Q}_{Radiation}$), Wärmefluss durch Wärmeeintrag des Fahrzeuges ($\dot{Q}_{VehicleCondition}$).

19. Verfahren nach Anspruch 17 oder 18, **dadurch gekennzeichnet, dass** zum Einlernen der Kompensationsgröße die Analysegröße ($f_k$, $\Delta$DIAG, $\Delta$SIDE, $\Delta$AXLE), insbesondere Eigenfrequenz, zusammen mit der berechneten Reifentemperatur ($T_{Reifen}$) über ein oder mehrere Fahrten betrachtet wird.

20. Verfahren nach mindestens einem der Ansprüche 17 bis 19, **dadurch gekennzeichnet, dass** die Reifentemperatur ($T_{Reifen}$) unter Berücksichtigung mindestens zweier der folgenden Größen berechnet wird: Außentemperatur ($T_{Aussen}$), Temperatur in einem Steuergerät, Motor-Ansauglufttemperatur, Kühlmitteltemperatur, Motortemperatur ($T_{Engine}$), Bremsentemperatur ($T_{Brake}$), Standzeit des Fahrzeugs, Fahrprofil seit Einschalten der Zündung, insbesondere Fahrzeuggeschwindigkeit (v), Gierrate, Querbeschleunigung, Antriebsmoment und/oder gefahrene Kilometer, Umgebungssensorinformationen, insbesondere Regensensor- und/oder Taupunktsensorinformationen.

21. Computerprogrammprodukt, **dadurch gekennzeichnet, dass** dieses einen Algorithmus definiert, welcher ein Verfahren gemäß mindestens einem der Ansprüche 1 bis 20 umfasst.

**Claims**

1.  Method for indirect tyre pressure monitoring, in which method a rolling circumference analysis of the tyres, in which rolling circumference analysis variables $\Delta$DIAG, $\Delta$SIDE, $\Delta$AXLE) are determined from currently determined and taught test variables which describe the rotational movement of the wheels, and a frequency analysis of the natural oscillation behaviour of at least one tyre, in which at least one frequency analysis variable ($f_k$) is determined, are performed, wherein to provide a warning regarding a tyre pressure loss, an evaluation of the rolling circumference analysis (A) and of the natural frequency analysis (C) and a combined evaluation (B) of both analysis methods are performed, **characterized in that**, in the combination of both analysis methods (B), warning thresholds (WS) of each of the two analysis methods are selected as a function of the analysis variables ($\Delta U_i$, $\Delta f_i$), in particular the wheel-specific pressure loss analysis variables, of the respective other method.

2.  Method according to Claim 1, **characterized in that** a natural frequency analysis is performed for each tyre.

3.  Method according to Claim 1 or 2, **characterized in that**, in the combination of both analysis methods (B), wheel-specific pressure loss analysis variables ($\Delta U_i$, $\Delta f_i$) are determined in each case for the rolling circumference analysis (I) and the frequency analysis (II).

4.  Method according to at least one of Claims 1 to 3, **characterized in that**, in the combination of both analysis methods (B), warning thresholds (WS) of each of the two analysis methods are selected as a function of the analysis variables ($\Delta U_i$, $\Delta f_i$), in particular the wheel-specific pressure loss analysis variables, of the respective other method and a measure of correlation (K) between the two analysis methods.

5.  Method according to Claim 1 or 4, **characterized in that** the warning thresholds (WS) are changed as a function of the availability (7, 8) of the analysis variables ($\Delta U_i$, $\Delta f_i$), in particular of the pressure loss analysis variables.

6.  Method according to at least one of Claims 1 and 3 to 5, **characterized in that**, for at least one wheel, in particular for each wheel, a combined wheel-specific pressure loss analysis variable is determined in particular on the basis of a warning map (14), with said combined wheel-specific pressure loss analysis variable being influenced by the pressure loss analysis variables ($\Delta U_i$, $\Delta f_i$), and in particular the warning thresholds (WS), of both analysis methods.

7.  Method according to Claim 6, **characterized in that** a warning (10) with regard to a tyre pressure loss is output as a function of at least two, in particular all, of the combined wheel-specific pressure loss analysis variables.

8.  Method according to Claim 7, **characterized in that** the warning (10) takes place on the basis of the maximum (16) of the combined wheel-specific pressure loss analysis variables.

9.  Method according to at least one of the preceding claims, **characterized in that**, for at least one of the determined analysis variables ($\Delta U_i$, $\Delta f_i$), in particular rolling circumference analysis variable, frequency analysis variable, pressure loss analysis variable or combined pressure loss analysis variable, a plausibility check (2, 5) of the determined value is performed on the basis of the profile of the analysis variable with respect to time.

10.  Method according to Claim 9, **characterized in that** a decision as to whether a pressure loss or a disturbance influence is present is made on the basis of the result of the plausibility check (2, 5).

11.  Method according to at least one of the preceding claims, **characterized in that** the loading and/or a change in loading of the vehicle is determined (6).

12.  Method according to Claim 11, **characterized in that** the detection of the loading and/or change in loading (6) is determined from a combination of at least one item of information from a rolling circumference analysis (I) of the wheels with at least one item of information from a frequency analysis (II) of the natural oscillation behaviour of at least one tyre.

13.  Method according to Claim 12, **characterized in that**, in the frequency analysis (II) for at least one wheel, in particular for each wheel, a measure variable which constitutes a measure for the characteristic of the natural frequency, in particular the energy content of the spectrum in the region of the natural frequency, is determined, and **in that** the measure variable(s), in particular ratios of measure variables, is/are used for the detection of the loading and/or change in loading (6).

**14.** Method according to Claim 13, **characterized in that** the ratio of the measure variables between the front and rear wheels is used.

**15.** Method according to at least one of Claims 11 to 14, **characterized in that** the identification of a loading and/or change in loading (6) leads to a change in the warning thresholds (WS) of the analysis variables ($\Delta U_i$, $\Delta f_i$), in particular of the loading-dependent pressure loss analysis variables, and/or to a compensation of the analysis variables, in particular of the loading-dependent pressure loss analysis variables.

**16.** Method according to at least one of the preceding claims, **characterized in that**, in particular in a frequency analysis (C, II), a temperature compensation (20) of an analysis variable ($f_k$, $\Delta$DIAG, $\Delta$SIDE, $\Delta$AXLE), in particular of the natural frequency, of at least one tyre is performed.

**17.** Method according to Claim 16, **characterized in that** a tyre temperature ($T_{Reifen}$) calculated by means of a temperature model (17) is used for the determination of a compensation variable, in particular of the following quotient: change in the frequency analysis variable divided by change in temperature.

**18.** Method according to Claim 17, **characterized in that** the temperature model (17) takes into consideration at least one of the following heat changes: heat flow as a result of flexing work of the tyre ($\dot{Q}_{Walk}$), heat flow as a result of convection ($\dot{Q}_{Convection}$), heat flow as a result of radiation from the tyre ($\dot{Q}_{Radiation}$), heat flow as a result of introduction of heat from the vehicle $\dot{Q}_{VehicleCondition}$).

**19.** Method according to Claim 17 or 18, **characterized in that**, for the teaching of the compensation variable, the analysis variable ($f_k$, $\Delta$DIAG, $\Delta$SIDE, $\Delta$AXLE), in particular natural frequency, is taken into consideration, together with the calculated tyre temperature ($T_{Reifen}$), over one or more journeys.

**20.** Method according to at least one of Claims 17 to 19, **characterized in that** the tyre temperature ($T_{Reifen}$) is calculated taking into consideration at least two of the following variables: outside temperature ($T_{Aussen}$), temperature in a control unit, engine intake air temperature, coolant temperature, engine temperature ($T_{Engine}$), brake temperature ($T_{Brake}$), service life of the vehicle, driving profile since activation of the ignition, in particular vehicle speed (v), yaw rate, lateral acceleration, drive torque and/or kilometres travelled, items of information from an environment sensor, in particular items of information from a rain sensor and/or dew point sensor.

**21.** Computer program product, **characterized in that** it defines an algorithm which comprises a method according to at least one of Claims 1 to 20.

**Revendications**

**1.** Procédé de surveillance indirecte de la pression d'un bandage pneumatique de roue, le procédé comprenant une analyse de la périphérie de roulement du bandage pneumatique, dans laquelle des grandeurs d'analyse de la périphérie de roulement ($\Delta$DIAG, $\Delta$SIDE, $\Delta$AXLE) sont déterminées à partir de grandeurs de test déterminées en chaque instant et de grandeurs de test déterminées par apprentissage, et une analyse en fréquence du comportement d'autovibration, dans laquelle au moins une grandeur d'analyse en fréquence ($f_x$) est déterminée, sont effectuées sur au moins un bandage pneumatique, une évaluation de l'analyse de la périphérie de roulement (A) et de l'analyse en fréquences propres (C) ainsi qu'une évaluation combinée (B) des deux méthodes d'analyse étant réalisées, **caractérisé en ce que** dans la combinaison (B) des deux méthodes d'analyse, des seuils d'alerte (WS) de chacune des deux méthodes d'analyse sont sélectionnés en fonction des grandeurs d'analyse ($\Delta U_i$, $\Delta f_i$) et en particulier des grandeurs d'analyse de la perte de pression des différentes roues de l'autre des deux méthodes.

**2.** Procédé selon la revendication 1, **caractérisé en ce qu'**une analyse en fréquences propres est réalisée pour chaque bandage.

**3.** Procédé selon les revendications 1 ou 2, **caractérisé en ce que** dans la combinaison (B) des deux méthodes d'analyse, des grandeurs d'analyse ($\Delta U_i$, $\Delta f_i$) de la perte de pression des différentes roues sont déterminées pour l'analyse (I) de la périphérie de roulement et pour l'analyse (II) en fréquences propres.

**4.** Procédé selon au moins l'une des revendications 1 à 3, **caractérisé en ce que** dans la combinaison (B) des deux méthodes d'analyse, des seuils d'alerte (WS) de chacune des deux méthodes d'analyse sont sélectionnés en fonction des grandeurs d'analyse ($\Delta U_i$, $\Delta f_i$) et en particulier des grandeurs d'analyse de la perte de pression des différentes roues de l'autre des deux méthodes et en fonction d'une mesure de corrélation (K) entre les deux méthodes d'analyse.

**5.** Procédé selon les revendications 1 ou 4, **caractérisé en ce que** les seuils d'alerte (WS) sont modifiés en fonction de la disponibilité (7, 8) des grandeurs d'analyse ($\Delta U_i$, $\Delta f_i$), en particulier des grandeurs d'analyse de la perte de pression.

**6.** Procédé selon au moins l'une des revendications 1 et 3 à 5, **caractérisé en ce que** pour au moins une roue et en particulier pour chaque roue, une grandeur combinée d'analyse de la perte de pression est déterminée en particulier à l'aide d'un champ d'alertes (14) dans lequel les grandeurs d'analyse ($\Delta U_i$, $\Delta f_i$) de la perte de pression et en particulier les seuils d'alerte (WS) des deux méthodes d'analyse interviennent.

**7.** Procédé selon la revendication 6, **caractérisé en ce qu'**une alerte (10) concernant le perte de pression d'un bandage est lancée en fonction d'au moins deux et en particulier de toutes les grandeurs combinées d'analyse de la perte de pression de toutes les roues.

**8.** Procédé selon la revendication 7, **caractérisé en ce que** l'alerte (10) a lieu à l'aide du maximum (16) des grandeurs combinées d'analyse de la perte de pression de toutes les roues.

**9.** Procédé selon au moins l'une des revendications précédentes, **caractérisé en ce que** pour au moins l'une des grandeurs d'analyse ($\Delta U_i$, $\Delta f_i$) déterminées, en particulier la grandeur d'analyse de la périphérie de roulement, la grandeur d'analyse en fréquence, la grandeur d'analyse de la perte de pression ou la grandeur combinée d'analyse de la perte de pression, une vérification (2, 5) de la plausibilité de la valeur définie est réalisée à l'aide de l'évolution de la valeur d'analyse au cours du temps.

**10.** Procédé selon la revendication 9, **caractérisé en ce que** sur la base du résultat de la vérification (2, 5) de plausibilité, il est conclu si une perte de pression ou un effet perturbateur prévalent.

**11.** Procédé selon au moins l'une des revendications précédentes, **caractérisé en ce que** la charge et/ou une modification de la charge du véhicule sont déterminées (6).

**12.** Procédé selon la revendication 11, **caractérisé en ce que** la détection (6) de la charge et/ou de la modification de la charge sont effectuées à partir de l'association d'au moins une information d'une analyse (I) de la périphérie de roulement des roues et d'au moins une information d'une analyse (II) en fréquences propres d'au moins un bandage de roue.

**13.** Procédé selon la revendication 12, **caractérisé en ce que** dans l'analyse (II) en fréquences d'au moins une roue et en particulier de chaque roue, une grandeur de mesure qui représente une mesure de l'amplitude de la fréquence propre et en particulier du contenu en énergie du spectre au niveau de la fréquence propre est déterminée et **en ce que** la ou les grandeurs de mesure et en particuliers des rapports entre les grandeurs de mesure sont utilisés pour détecter (6) la charge et/ou une modification de la charge.

**14.** Procédé selon la revendication 13, **caractérisé en ce qu'**il utilise le rapport entre les grandeurs de mesure des roues avant et celles des roues arrière.

**15.** Procédé selon au moins l'une des revendications 11 à 14, **caractérisé en ce que** la constatation (6) de la présence d'une charge et/ou d'une modification de la charge conduit à une modification des seuils d'alerte (WS) des grandeurs d'analyse ($\Delta U_i$, $\Delta f_i$), en particulier des grandeurs d'analyse de la perte de pression qui dépendent de la charge, et/ou à une compensation des grandeurs d'analyse et en particulier des grandeurs d'analyse de la perte de pression qui dépendent de la charge.

**16.** Procédé selon au moins l'une des revendications précédentes, **caractérisé en ce qu'**en particulier dans une analyse en fréquences (C, II), une compensation (20) de la température est effectuée pour une grandeur d'analyse ($f_x$, $\Delta$DIAG, $\Delta$SIDE, $\Delta$AXLE) et en particulier pour la fréquence propre.

**17.** Procédé selon la revendication 16, **caractérisé en ce que** pour déterminer une grandeur de compensation, en particulier du quotient entre la modification de la grandeur d'analyse en fréquences et la modification et la modification de la température, une température de bandage ($T_{Reifen}$) calculée au moyen d'un modèle de température (17) est utilisée.

**18.** Procédé selon la revendication 17, **caractérisé en ce que** le d'un modèle de température (17) fait intervenir au moins l'une des modifications thermiques suivantes : flux de chaleur dû au travail de pétrisssage du bandage ($Q_{walk}$), flux de chaleur dû à la convection ($Q_{convection}$), flux de chaleur dû au rayonnement du bandage ($Q_{radiation}$) et flux de chaleur dû à l'apport de chaleur par le véhicule ($Q_{vehicle\ condition}$).

**19.** Procédé selon les revendications 17 ou 18, **caractérisé en ce que** pour l'apprentissage de la grandeurs de compensation, la grandeur d'analyse ($f_x$, $\Delta$DIAG, $\Delta$SIDE, $\Delta$AXLE) et en particulier la fréquence propre sont prises en compte en même temps que la température ($T_{Reifen}$) du bandage calculée sur un ou plusieurs parcours.

**20.** Procédé selon au moins l'une des revendications 17 à 19, **caractérisé en ce que** la température du bandage ($T_{Reifen}$) est calculée en tenant compte d'au moins deux des grandeurs suivantes : température extérieure ($T_{Aussen}$), température régnant dans un appareil de commande, température de l'air d'admission du moteur, température du fluide de refroidissement, température du moteur ($T_{engine}$), température des freins ($T_{brake}$), durée d'arrêt du véhicule, profil de roulage depuis le branchement de l'allumage, notamment vitesse (v) du véhicule, vitesse de lacet, accélération transversale, couple moteur et/ou kilométrage parcouru, informations des sondes d'environnement et notamment informations des sondes de pluie et/ou des sondes de point de rosée.

**21.** Produit de programme informatique, **caractérisé en ce qu'**il définit un algorithme qui comprend un procédé selon au moins l'une des revendications 1 à 20.

Fig. 1

W

A

B

C

E

$\omega_i$

$F_j$

Fig. 2

# Fig. 3

Fig. 4

# Fig. 5

# Fig. 6

$$X_n \longrightarrow \boxed{17} \xrightarrow{T_{Reifen}} \boxed{18}$$

$$\boxed{19}$$

$$\boxed{20}$$

$f_{VR}$
$f_{VL}$
$f_{HR}$
$f_{HL}$

$f'_{VR}$
$f'_{VL}$
$f'_{HR}$
$f'_{HL}$

# Fig. 7

$$\boxed{T_{Aussen}} \longrightarrow \boxed{\dot{Q}_{Radiation}}$$

$$\boxed{v} \longrightarrow \boxed{\dot{Q}_{Convection}}$$

$$\boxed{\dot{Q}_{Walk}}$$

$$\boxed{T_{Brake}, T_{Engine}} \longrightarrow \boxed{\dot{Q}_{VehicleCondition}}$$

$$\boxed{21}$$

$$\boxed{22}$$

$$\boxed{23}$$

$$\boxed{T_{Reifen}}$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10058140 A1
- EP 0578826 B1
- WO 0187647 A1
- WO 05072995 A1
- WO 2005005173 A1
- WO 2005072995 A1
- WO 2005005174 A1